# EUROPÄISCHE PATENTSCHRIFT

(11) **EP 1 489 425 B1**
(45) Veröffentlichungstag und Bekanntmachung des Hinweises auf die Patenterteilung: **14.02.2007**
(21) Anmeldenummer: 04013819.0
(22) Anmeldetag: 11.06.2004
(51) Int. Cl.: G01N 35/00, B25J 9/16, B25J 19/02

(54) **Vorrichtung und Verfahren zum Positionieren von Funktionselementen und/oder Behältern auf dem Arbeitsfeld eines Labormanipulators mittels zweier sich kreuzender Lichtschranken**
Device and method for positioning functional elements and/or vessels on the work space of a laboratory manipulator by the help of two crossing light barriers
Dispositif et méthode pour positionner des éléments fonctionnels et/ou des récipients sur la surface de travail d'un manipulateur de laboratoire à l'aide de deux barrières optiques se croisant

(30) Priorität: 20.06.2003 CH 10802003
(43) Veröffentlichungstag der Anmeldung: 22.12.2004
(73) Patentinhaber: Tecan Trading AG, 8708 Männedorf (CH)
(72) Erfinder: Ingenhoven, Nikolaus, 8713 Uerikon (CH); Strebel, Christian, 8606 Greifensee (CH); Fisch, Peter, 8614 Hombrechtikon (CH); Leemann, Joas, 8626 Ottikon (CH)
(74) Vertreter: OK pat AG

(56) Entgegenhaltungen:
- EP-A- 0 555 739
- WO-A-03/059580
- DE-A- 2 338 985
- DE-A- 19 754 857
- DE-A- 19 923 222
- PATENT ABSTRACTS OF JAPAN Bd. 018, Nr. 502 (M-1676), 20. September 1994 (1994-09-20) -& JP 06 170768 A (MEIDENSHA CORP), 21. Juni 1994 (1994-06-21)

## Beschreibung

Die Erfindung betrifft gemäss dem Oberbegriff des unabhängigen Anspruchs 1 -eine Vorrichtung zum Positionieren von Funktionselementen und/oder Behältern in einem System zum Arbeiten mit fluidhaltigen Proben, wobei das System ein im wesentlichen horizontales Arbeitsfeld mit einer Längnausdehnung X und einer sich rechtwinklig dazu erstreckenden Querausdehnung Y sowie zumindest einen Robotarm mit zumindest einem im wesentlichen senkrecht zum Arbeitsfeld in einer Z-Richtung ausgerichteten Funktionselement umfasst, wobei der Robotarm das Funktionselement zumindest in einem Teilbereich des Arbeitsfelds in X- und/oder Y- und/oder Z-Richtung bewegen kann.

Arbeitsplattformen oder Systeme zum Behandeln von Flüssigkeiten, wie zum Beispiel das Pipettieren von Flüssigkeiten aus Behältern und zum Verteilen derselben in den Wells einer Mikroplatte weisen gattungsgemässe Vorrichtungen auf, damit die Behälter und der Robotarm so zueinander platziert werden können, dass das Liquid-Handling automatisiert und reproduzierbar abläuft. Es hat sich gezeigt, dass die Genauigkeit, mit der z.B. eine Pipettenspitze an einem Ort auf einer marktüblichen Arbeitsplattform automatisiert positionierbar ist, nicht ausreicht um die Wells einer Mikroplatte mit 1536 Wells routinemässig präzise anzufahren. Insbesondere beim Verwenden von mehreren, entlang einer Linie angeordneten Pipettenspitzen machen sich auch geringste Verdrehungen der zumindest auf einem Teilbereich des Arbeitsfelds positionierbaren Mikroplatten gegenüber dem Koordinatensystem des Robotarms bemerkbar. Diese Verdrehungen oder Abweichungen von der Idealposition betreffen im ungünstigsten Fall Werte auf der X-, Y- und Z-Achse. Bei einer zu grossen Fehlertoleranz besteht die Gefahr, dass eine oder mehrere Pipettenspitzen, Temperaturfühler bzw. pH-Sonden, oder ein anderes, längliches, dünnes Objekt, das in einem Well positioniert werden soll, durch ein Anstossen an die Wände des Wells bzw. die Oberfläche der Mikroplatte beschädigt wird. Zudem besteht bei einem unsanften Zusammenstoss eines solchen Objekts mit der Mikroplattenoberfläche die Gefahr eines Probenverlustes, einer Kontaminierung der Nachbarproben und des Arbeitsplatzes. Ein präzises Anfahren der Wells, bei dem keine Gefahr einer ungewollten Berührung von Teilen der Mikroplatte besteht, ist deshalb eine Grundvoraussetzung für ein routinemässiges Arbeiten mit einem Liquid-Handling-System, das z.B. zum automatischen Untersuchen von Blutproben eingesetzt werden kann.

Aus DE 199 23 222 A ist ein Verfahren bzw. eine Vorrichtung zum genauen Positionieren einer Pipette in einer Analyseeinrichtung bekannt, gemäss welcher eine exakte Position der Pipette in X- und Z-Richtung bezüglich der Probengefässe der Analyseeinrichtung bestimmt wird. Eine Pipette wird in einem ersten Schritt zum Ermitteln ihrer genauen Position linear entlang einer Bahn bewegt bis ein Lichtstrahl im wesentlichen senkrecht gekreuzt wird. In einem zweiten Schritt wird die Pipettenspitze mittig zu diesem Lichtstrahl positioniert und in Z-Richtung nach oben aus dem Lichtstrahl herausbewegt.

Aus JP 06 170768 A ist ein Kontrollsystem zum Erfassen einer Sollposition eines Robotarms bekannt, welches zwei sich kreuzende Lichtstrahlen umfasst. Werden durch einen am Robotarm befestigten Fühler in einer definierten Position des Robotarms beide Lichtstrahlen gleichzeitig unterbrochen, so befindet sich dieser in der Sollposition und der Roboter kann die begonnene Arbeit fortsetzen.

Aus DE 197 54 857 ist eine Vorrichtung zum Bestimmen der Position des Schweissdrahts oder der Elektrode eines Roboters mit zwei sich kreuzenden Lichtschranken bekannt, die vorzugsweise in einem rechten Winkel zueinander verlaufen.

Ein erster Aspekt der Aufgabe der vorliegenden Erfindung ist es somit, eine alternative Vorrichtung bereit zu stellen, mit welcher die Wells einer 1536-er Mikroplatte auf das Koordinatensystem des Robotarms ausgerichtet werden können. Ein zweiter Aspekt dieser Aufgabe betrifft das Bereitstellen einer alternativen Vorrichtung, mit welcher die Pipettenspitzen oder andere, länglichen, dünnen Objekten an diesem Robotarm präzise ausgerichtet werden.

Diese Aufgabe wird in Bezug auf den ersten Aspekt gemäss dem unabhängigen Anspruch 1 dadurch gelöst, dass eine eingangs beschriebene Vorrichtung verbessert wird, indem diese zwei sich innerhalb des Teilbereichs des Arbeitsfeldes kreuzende Lichtschranken mit je einem Sender und einem Empfänger umfasst.

Dabei dehnen sich die Abtaststrahlen dieser Lichtschranken jeweils in einer von der X-Richtung und/oder von der Y-Richtung abweichenden Richtung aus.

Diese Aufgabe wird in Bezug auf den zweiten Aspekt gemäss dem Anspruch 9 dadurch gelöst, dass ein System mit zumindest einer erfindungsgemässen Vorrichtung und einem Robotarm vorgeschlagen wird. Dabei umfasst der Robotarm einen einzigen Sitz oder eine Vielzahl Sitze für Funktionselemente und diese Sitze umfassen Korrekturelemente, welche zum Ausüben einer Kraft auf jedes Funktionselement und damit zum Korrigieren der Position jedes Funktionselements in dessen Sitz in X- und/oder Y- und/oder Z-Richtung ausgebildet sind. Solche erfindungsgemässen Systeme sind dadurch gekennzeichnet, dass diese Korrekturelemente in einer Richtung auf die Funktionselemente wirken, die entweder mit der Ausdehnungsrichtung des Abtaststrahls der ersten Lichtschranke oder mit der Ausdehnungsrichtung des Abtaststrahls der zweiten Lichtschranke der erfindungsgemässen Vorrichtung übereinstimmt.

Zusätzliche, bevorzugte erfinderische Merkmale ergeben sich aus den abhängigen Ansprüchen.

Zu bewegende Objekte oder Funktionselemente sind im Allgemeinen länglich, dünn, erstrecken sich in Z-Richtung und sind in dieser Richtung vorzugsweise auch anheb- bzw. absenkbar ausgebildet. Typische Funktionselemente sind z.B. Referenzspitzen bzw. Referenznadeln zum gegenseitigen Einstellen bzw. Ausrichten von Mikroplatten und anderen Gefässen in Bezug auf ein Koordinatensystem eines Liquid-Handling-Systems. Auch Dispenserspitzen und Pipettenspitzen sind solche Funktionselemente, wobei z.B. auch Sprühnadeln als Dispenserspitzen bezeichnet werden. Fixe Stahlkanülen, Wegwerfspitzen aus Kunststoff und sogenannte "ZipTipS^{™}" (Millipore Corporation, 80 Ashby Road, Bedford, Massachusetts 01730-2271, U.S.A.) werden hier als beispielhafte Pipettenspitzen bezeichnet. Elektroden, Temperatur-Fühler, pH-Sonden und optische Fasern gehören ebenfalls zu den bevorzugten zu positionierenden Objekten bzw. Funktionselementen.

Als Behälter oder Gefässe werden hier Mikroplatten mit z.B. 96, 384 oder 1536 Wells, aber auch Tröge (z.B. zum Sammeln von Abfall oder zum Bereitstellen einer Stammlösung), in einem Röhrchenhalter aufgenommene Röhrchen mit z.B. Blutproben oder andere Behälter für Proben oder Flüssigkeiten bezeichnet. Als Behälter werden hier auch sogenannte "Carrier" bezeichnet. Diese sind üblicherweise zur Aufnahme von drei Mikroplatten ausgebildet und dienen als hochpräziser Träger für diese Mikroplatten. Solche Carrier weisen bevorzugt in einem Endbereich ein Drehgelenk und im anderen Endbereich eine Einstellschraube zum Feineinstellen der Carrieroberfläche in X- und/oder in Z-Richtung auf.

Im Folgenden wird die Erfindung an Hand von schematischen, den Umfang der Erfindung nicht einschränkenden Zeichnungen von bevorzugten Ausführungsformen näher erläutert. Dabei zeigen:
- Fig. 1: eine Draufsicht auf ein Liquid-Handling-System mit einem einen einzigen Sitz umfassenden Robotarm, einem im wesentlichen horizontalen Arbeitsfeld und einer erfindungsgemässen Vorrichtung zum Positionieren von Funktionselementen und/oder Behältern;
- Fig. 2: eine Draufsicht auf einen hochpräzisen Träger für Mikroplatten, wobei:
Fig. 2A einen gegenüber dem Koordinatensystem des Liquid-Handling-Systems verdrehten Carrier, und
Fig. 2B einen gegenüber dem Koordinatensystem des Liquid-Handling-Systems ausgerichteten Carrier zeigt;
- Fig. 3: ein Verfahrens-Schema zum Feststellen der aktuellen Position eines zu positionierenden Funktionselements und zum Korrigieren dieser Position;
- Fig. 4: einen Horizontalschnitt durch den Sitz eines Funktionselements am Robotarm mit den erfindungsgemässen Korrekturelementen zum Ausrichten des Funktionselements.

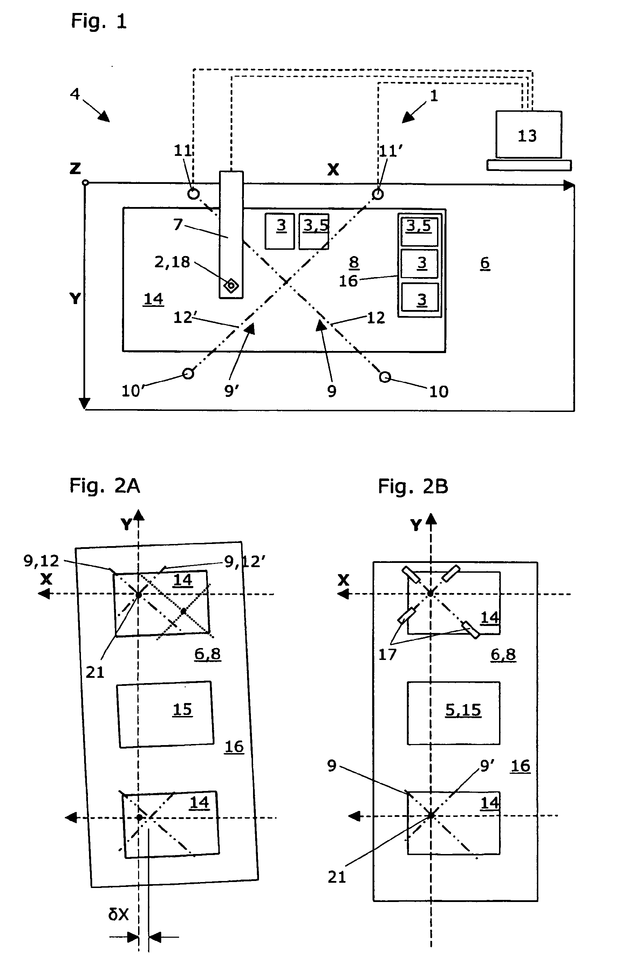

Figur 1 zeigt eine Draufsicht auf einLiquid-Handling-System 4 mit einem einen einzigen Sitz 18 umfassenden Robotarm 7, einem im wesentlichen horizontalen Arbeitsfeld 6 und einer erfindungsgemässen Vorrichtung 1 zum Positionieren von Funktionselementen 2 und/oder Behältern 3. Dieses System 4 zum Arbeiten mit fluidhaltigen Proben 5 umfasst ein im wesentlichen horizontales Arbeitsfeld 6 mit einer Längenausdehnung X und einer sich rechtwinklig dazu erstreckenden Querausdehnung Y. Der Robotarm 7 trägt ein im wesentlichen senkrecht zum Arbeitsfeld 6 in einer Z-Richtung ausgerichtetes Funktionselement 2 und kann dieses Funktionselement 2 zumindest in einem Teilbereich 8 des Arbeitsfelds 6 in X- und/oder Y- und/oder Z-Richtung bewegen. Die erfindungsgernässe Vorrichtung 1 umfasst zwei sich innerhalb des Teilbereichs 8 des Arbeitsfeldes 6 kreuzende Lichtschranken 9,9' mit je einem Sender 10,10' und einem Empfänger 11,11'. Die Abtaststrahlen 12,12' dieser Lichtschranken dehnen sich jeweils in einer von der X-Richtung und/oder von der Y-Richtung abweichenden Richtung aus.

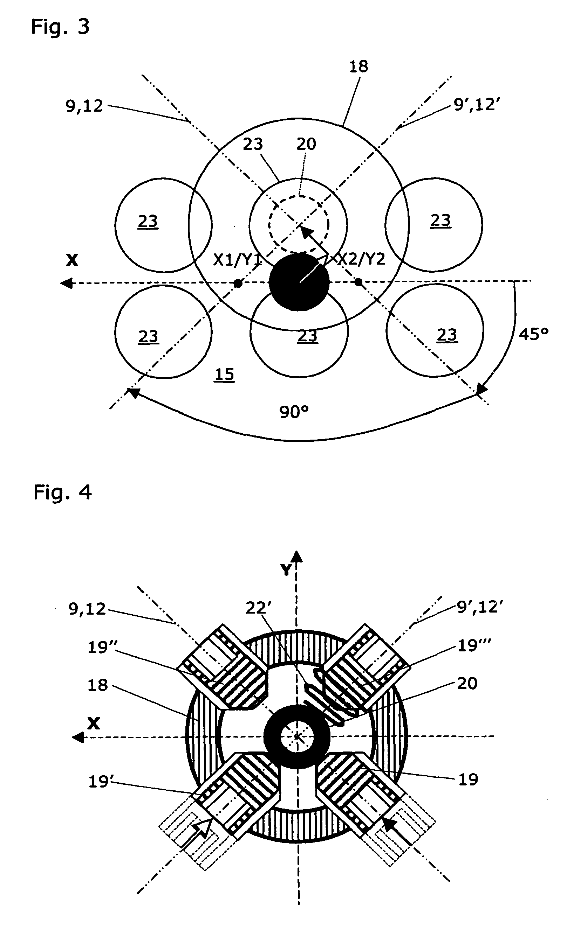

Vorzugsweise kreuzen sich die Abtaststrahlen 12,12' der Lichtschranken 9,9' im wesentlichen unter einem Winkel von 90°, wobei sich diese Abtaststrahlen sowohl in Bezug zur X-Richtung als auch in Bezug zur Y-Richtung im wesentlichen unter einem Winkel von 45° (vgl. Fig. 3) ausdehnen. Die Vorrichtung umfasst in einer bevorzugten Ausführungsform einen Rechner 13, der die Bewegungen des Robotarms 7 bzw. des Funktionselements 2 erfasst, und der die Signale der Empfänger 11,11' auswertet. Dabei korreliert der Rechner 13 diese Signale mit der X/Y/Z-Position desjenigen Funktionselements 2 im Arbeitsfeld 6, welches diese Signale auslöst.

Die Vorrichtung kann In ein Liquid-Handling-System integriert sein oder eine Platte 14 umfassen, welche die Aussenabmessungen einer Standardmikroplatte 15 aufweist. Im zweiten Fall ist die Vorrichtung 1 auf einem innerhalb des Arbeitsfelds 6 angeordneten, hochpräzisen Träger 16 für Standardmikroplatten fixierbar.

Figur 2 zeigt eine Draufsicht auf einen solchen hochpräzisen Träger oder Carrier 16 für Mikroplatten. In Figur 2A ist der Carrier 16 noch gegenüber dem Koordinatensystem des Liquid-Handling-Systems verdreht.

Vor dem Ausrichten des Carriers wird eine Platte 14 mit einer Vorrichtung 1, welche die Aussenabmessungen einer Standardmikroplatte 15 aufweist, in einer ersten Position auf einem innerhalb des Arbeitsfelds 6 angeordneten, hochpräzisen Träger 16 für Standardmikroplatten fixiert. Die beiden Lichtschranken 9,9' sind auf dieser Platte 14 angeordnet, wobei sich die Abtaststrahlen 12,12' der Lichtschranken 9,9' in einem Punkt kreuzen, welcher sich in einer definierten Position in Bezug zu Well A1 einer Standardmikroplatte 15 befindet.

Dadurch, dass sich der Kreuzungspunkt bevorzugt ausserhalb der Mitte der Platte befindet, wird einem Operateur ermöglicht, durch ein um 180 ° gedrehtes Aufsetzen der Platte 14 auf dem selben Platz (die beiden Lichtschranken sind Fig. 2A punktiert gezeichnet) die Ausrichtung der Oberfläche des Carriers entlang der X-Ausdehnung des Arbeitsfeldes 6 in Z-Richtung zu kontrollieren und gegebenenfalls mittels Stellschrauben zu korrigieren.

Mit dem Robotarm 7 wird darauf eine Referenznadel 21 im Kreuzungspunkt der Abtaststrahlen 12,12' der Lichtschranken 9,9' positioniert, dann werden die X-, Y- und Z-Werte dieses ersten Referenzpunktes im Rechner 13 gespeichert. Die Bewegungen des Robotarms 7 bzw. des Funktionselements 2 werden mit einem Rechner 13 erfasst, welcher die Signale der Empfänger 11,11' auswertet und diese Signale mit der X/Y/Z-Position desjenigen Funktionselements 2 im Arbeitsfeld 6 korreliert, welches diese Signale auslöst.

Die Platte 14 mit der Vorrichtung 1 wird darauf in einer zweiten Position auf dem selben hochpräzisen Träger 16 für Standardmikroplatten 15 fixiert (vgl. Fig. 2A, untere Position). Der Robotarm 7 wird mit der Referenznadel 21 in dem theoretischen Kreuzungspunkt der Abtaststrahlen 12,12' der Lichtschranken 9,9' positioniert, wo er sich um den Betrag des Fehlers δX vom Kreuzungspunkt der beiden Lichtschranken entfernt befindet. Darauf wird der hochpräzise Träger 16 so weit in X- oder Z-Richtung bewegt, bis sich die Referenznadel 21 im Kreuzungspunkt der Abtaststrahlen 12,12' der Lichtschranken 9,9' befindet (vgl. Fig. 2B). Der Carrier 16 ist nun ausgerichtet. Gegebenenfalls kann, wie schon beschrieben, die Ausrichtung der Oberfläche des Carriers entlang der X-Ausdehnung des Arbeitsfeldes 6 in Z-Richtung nochmals kontrolliert und mittels Stellschrauben korrigiert werden

Dieses Verfahren dient zum Positionieren von Behältern 3 in einem System 4 zum Arbeiten mit fluidhaltigen Proben 5. Dabei umfasst das System 4 ein im wesentlichen horizontales Arbeitsfeld 6 mit einer Längenausdehnung X und einer sich rechtwinklig dazu erstreckenden Querausdehnung Y sowie zumindest einen Robotarm 7 mit zumindest einem im wesentlichen senkrecht zum Arbeitsfeld 6 in einer Z-Richtung ausgerichteten Funktionselement 2. Das Funktionselement 2 (hier eine Referenznadel 21) wird mit dem Robotarm 7 zumindest in einem Teilbereich 8 des Arbeitsfelds 6 in X- und/oder Y- und/oder Z-Richtung bewegt. Zur Durchführung dieses Verfahrens wird zumindest eine Vorrichtung 1 so angeordnet, dass sich zwei Lichtschranken 9,9' mit je einem Sender 10,10' und einem Empfänger 11,11' innerhalb des Teilbereichs 8 des Arbeitsfeldes 6 kreuzen; die Abtaststrahlen 12,12' der Lichtschranken 9,9' dehnen sich dabei jeweils in einer von der X-Richtung und/oder von der Y-Richtung abweichender Richtung aus. Besonders bevorzugt wird, dass sich die Abtaststrahlen 12,12' der Lichtschranken 9,9' im wesentlichen unter einem Winkel von 90° kreuzen und sich sowohl in Bezug zur X-Richtung als auch in Bezug zur Y-Richtutng im wesentlichen unter einem Winkel von 45° ausdehnen

Bevorzugt sind bei einer erfindungsgemässen Vorrichtung die Sender 10,10' und Empfänger 11,11' der Lichtschranken 9,9' in je einem Tunnel 17 angeordnet. Dadurch wird der störende Einfluss der Laborbeleuchtung bzw. des Tageslichts reduziert. Wird auf den ersten und dritten Platz zur Aufnahme einer Mikroplatte auf einem Carrier je eine Vorrichtung 1: montiert, so kann das Ausrichten des Carriers 16 noch beschleunigt werden. Auch kann vorgesehen sein (nicht gezeigt), dass eine Platte 14 vier Lichtschranken aufweist, welche so umschaltbar sind dass jeweils nur zwei sich schneidende Lichtschranken aktiv sind.

Bevorzugt wird ein System 4 zum Arbeiten mit fluidhaltigen Proben 5, welches zumindest eine eben beschriebene Vorrichtung 1 umfasst. Speziell bevorzugt wird ein solches System 4 mit einem Robotarm 7, der eine Vielzahl Sitze 18 für Funktionselemente 2 umfasst. Bevorzugte Funktionselemente sind hier Pipetten- bzw. Dispenser-Spitzen 20. Diese Sitze 18 umfassen Korrekturelemente 19, welche zum Ausüben einer Kraft auf jedes Funktionselement 2 und damit zum Korrigieren der Position jedes Funktionselements 2 in dessen Sitz 18 in X- und/oder Y- und/oder Z-Richtung ausgebildet sind. Dabei wirken diese Korrekturelemente 19,19' in einer Richtung auf die Funktionselemente 2, die entweder mit der Ausdehnungsrichtung des Abtaststrahls 12 der ersten Lichtschranke 9 oder mit der Ausdehnungsrichtung des Abtaststrahls 12' der zweiten Lichtschranke 9' übereinstimmt.

Bevorzugt sind diese Korrekturelemente 19,19' als Schrauben oder Piezoelemente ausgebildet. Dabei haben sich Madenschrauben mit Innensechskant besonders bewährt. Piezoelemente weisen gegenüber den Schrauben den Vorteil auf, dass die Verstellung der Position des entsprechenden Funktionselementes 2, also z.B. einer Pipettenspitze, automatisch korrigiert werden könnte. Als nachteilig könnten bei Piezoelementen dagegen die höheren Gestehungskosten und die geringeren Verstellwege angesehen werden.

Jeder Sitz 18 für ein Funktionselement 2 umfasst in einer komplexeren Ausführungsform vier Korrekturelemente 19,19',19",19"' von denen zwei und zwei sich jeweils gegenüber liegen und in ihrer Wirkung ergänzen. Besonders bevorzugt wird, dass die Verstellrichtung dieser Korrekturelemente 19,19',19",19"' gerade mit je einer Ausdehnungsrichtung der Abtaststrahlen 12,12' einer Lichtschranke 9,9' der erfindungsgemässen Vorrichtung 1 übereinstimmt. Es hat sich gezeigt, dass in den meisten Fällen auf ein Feststellen des Funktionselementes 2 durch Anziehen der den verstellten Korrekturelementen 19,19' gegenüberliegenden Schrauben oder Piezoelemente 19",19"' verzichtet werden kann. Es kann aber manchmal doch notwendig sein, so dass zusätzliche Zeit für dieses Feststellen aufgewendet werden muss. Als Kompromisslösung, mit der die Feststellzeit eingespart werden kann, wird als einfachere Ausführungsform ein Sitz 18 vorgesehen, bei dem jedem Korrekturelement 19,19' eine gegenwirkende Feder 22,22' zugeordnet ist (vgl. Fig. 4).

Vorgeschlagen wird auch ein Verfahren zum Ausrichten von Pipetten- bzw. Dispenser-Spitzen 20 auf die Wells 23 einer in dem Arbeitsfeld 6 eines Systems 4 angeordneten Standardmikroplatte 15. Alle auszurichtenden Pipetten- bzw. Dispenser-Spitzen 20 werden in X-Richtung (vgl. Fig. 3) oder Y-Richtung (nicht gezeigt) durch die beiden Lichtschranken (9,9') bewegt, wobei bei jedem Unterbruch der Abtaststrahlen 12,12' die X- und Y-Werte (X1/Y1 und X2/Y2 in Fig. 3) der entsprechenden Pipetten- bzw. Dispenser-Spitzen 20 erfasst und im Rechner 13 gespeichert werden. Aus den gespeicherten X- und Y-Werten werden erste und zweite Korrekturwerte für jede der auszurichtenden Pipetten- bzw. Dispenser-Spitzen 20 errechnet. Die auszurichtenden Pipetten- bzw. Dispenser-Spitzen 20 werden nacheinander in eine Korrigierposition (schwarze Kreisscheibe in Fig. 3) gebracht. Aus dieser Korrigierposition werden die Pipetten- bzw. Dispenser-Spitzen 20 mittels Aktivierung der entsprechenden Korrekturelemente 19,19' um deren individuellen Korrekturwerte (weisser bzw. schwarzer Pfeil in Fig. 3) verstellt, bis die Spitzen 20 ihre Endposition im Kreuzungspunkt der Abtaststrahlen 12,12' der Lichtschranken 9,9' (gestrichelter Kreis in Fig. 3) einnehmen.

Bei Verwendung von Piezoelementen als Korrekturelemente 19,19' kann dieses Verfahren durch den Rechner 13 gesteuert werden und automatisch ablaufen. Werden einfache Madenschrauben als Korrekturelemente 19,19' eingesetzt, so kann der Verstellvorgang mit dem Rechner überwacht und jeweils beim Unterbrechen der Lichtschranken 9,9' ein Akustiksignal ausgelöst werden, welches dem Operateur anzeigt, dass jeweils das Ende des individuellen Korrekturwertes erreicht ist.

Die Vorrichtung 1 kann auch zu einer Kontrolle der aktuellen Position von Pipetten- oder Dispenser-Spitzen 20 verwendet werden. Vor dem Ausführen von Liquid-Handling-Arbeiten geschieht dies vorzugsweise durch das Platzieren einer Platte 14 mit den sich kreuzenden Lichtschranken 9,9' auf einem Hochpräzisonsträger oder Carrier 16. Danach wird die Position der einzelnen, in einem Robotarm eingesetzten Funktionselemente 2 und auch die Lage des Carriers 16 in einem Durchgang geprüft und - falls erforderlich - auf einem Computerfile festgehalten. Der Ausdruck eines solchen Files kann dem Pipettier- oder Dispenser-Protokoll angehängt werden. Vor der Ausführung des Liquid-Handlings wird die Platte 14 wieder weggenommen. Das Auflegen und Wegnehmen der Platte 14 wird vorzugsweise von einem weiteren Robotarm (nicht gezeigt) automatisch oder von einem Operateur manuell ausgeführt.

Auch während dem Ausführen der Lquid-Handling-Aufträge kann die aktuelle Position von Pipetten- oder Dispenser-Spitzen 20 überprüft werden. Dazu wird eine Platte 14 mit den sich kreuzenden Lichtschranken 9,9' permanent an einer vorbestimmten Position auf einem Hochpräzisonsträger oder Carrier 16 platziert. In diesem Fall kann die aktuelle Spitzenposition jederzeit bzw. sporadisch überprüft werden. Wird ein vorher bestimmter Fehlerwert in der Position überschritten, so kann ein Warnsignal abgegeben, ein entsprechendes Protokoll erstellt oder auch der Liquid-Handling-Vorgang gestoppt werden. Bei Verwendung von Piezoelementen 19,19' ist auch möglich, die Position der Spitzen 20 während dem Ausführen eines länger dauernden Liquid-Handling-Prozesses nachzujustieren.

## Patentansprüche

1. Platte (14) zur Verwendung beim Positionieren von Funktionselementen (2) und/oder Behältern (3) In einem Laborsystem (4) zum Arbeiten mit fluidhaltigen Proben (5), wobei das Laborsystem (4) ein im wesentlichen horizontales Arbeitsfeld (6) mit einer Länge (X) und einer sich rechtwinklig dazu erstreckenden Breite (Y) sowie zumindest einen Robotarm (7) mit zumindest einem im wesentlichen senkrecht zum Arbeitsfeld (6) in einer Z-Richtung ausgerichteten Funktionselement (2) umfasst, wobei der Robotarm (7) das Funktionselement (2) zumindest in einem Teilbereich (8) des Arbeitsfelds (6) zumindest in einer X-, oder Y-, oder Z-Richtung bewegen kann, wobei diese Richtungen (X,Y,Z) ein rechtwinkliges Koordinatensystem für die Bewegungen des Robotarms bzw. der Funktionselemente (2) definieren; und wobei die Platte (14) innerhalb des Teilbereichs (8) des Arbeitsfeldes (6) positionierbar ist und zwei sich kreuzende Lichtschranken (9,9') mit je einem Sender (10,10') und einem Empfänger (11,11') umfasst, **dadurch gekennzeichnet, dass** die Platte (14) die Aussenabmessungen einer Stahdardmikroplatte (15) aufweist und positionsgenau auf einem innerhalb des Arbeitsfeldes (6) angeordneten, hochpräzisen Träger (16) für Standardmikroplatten fixierbar ist, wobei die Lichtschranken (9,9') auf der Platte (14) so angeordnet sind, dass die Strahirichtungen beider Abtaststrahlen (12,12') nicht-parallel zu den Aussenkanten der Platte (14) verlaufen.

2. Platte (14) nach Anspruch 1, **dadurch gekennzeichnet dass** die Abtaststrahlen (12,12') der Lichtschranken (9,9') sich im wesentlichen unter einem Winkel von 90° kreuzen und mit den Aussenkanten der Platte (14) im wesentlichen einen Winkel von 45° einschliessen.

3. Platte (14) nach einem der Ansprüche 1 oder 2, **dadurch gekennzeichnet, dass** die Sender (10,10') und Empfänger (11,11') der Lichtschranken (9,9') in je einem Tunnel (17) angeordnet sind.

4. Platte (14) nach einem der vorhergehenden Ansprüche, **dadurch gekennzeichnet, dass** die beiden Lichtschranken (9,9') auf dieser Platte (14) so angeordnet sind, dass sich die Abtaststrahlen (12,12') der Lichtschranken (9,9') in einem Punkt, kreuzen, welcher sich in einer definierten Position in Bezug zu Well A1 einer Standardmikroplatte (15) befindet.

5. Platte (14) nach Anspruch 4, **dadurch gekennzeichnet, dass** sich der Kreuzungspunkt der Abtaststrahlen (12,12') der Lichtschranken (9,9') ausserhalb der Mitte der Platte (14) befindet.

6. Laborsystem (4) zum Arbeiten mit fluidhaltigen Proben (5), welches einen Rechner (13), umfasst, der einen Robotarm (7) steuert, **dadurch gekennzeichnet, dass** es zumindest eine Platte (14) nach einem der vorhergehenden Ansprüche umfasst, wobei der Rechner (13) die Bewegungen des Robotarms (7) bzw. des Funktionselements (2) erfasst und die Signale der Empfänger (11,11') auswertet.

7. Laborsystem (4) nach Anspruch 6, **dadurch gekennzeichnet, dass** der Rechner (13) diese Signale mit der X/Y/Z-Position desjenigen Funktionselements (2) im Arbeitsfeld (6) korreliert, welches diese Signale auslöst.

8. Laborsystem (4) nach Anspruch 6 oder 7, mit einem Robotarm (7), der einen einzigen Sitz (18) oder eine Vielzahl Sitze (18) für Funktionselemente (2) umfasst, wobei diese Sitze (18) Korrekturelemente (19) umfassen, welche zum Ausüben einer Kraft auf jedes Funktionselement (2) und damit zum Korrigieren der Position jedes Funktionselements (2) in dessen Sitz (18) in zumindest einer X-, oder Y-, oder Z-Richtung ausgebildet sind, **dadurch gekennzeichnet, dass** diese Korrekturelemente (19,19',19",19"') in einer Richtung auf die Funktionselemente (2) wirken, die entweder mit der Richtung des Abtaststrahls (12) der ersten Lichtschranke (9) oder mit der Richtung des Abtaststrahls (12') der zweiten Lichtschranke (9') übereinstimmt.

9. Laborsystem (4) nach Anspruch 8, **dadurch gekennzeichnet dass** diese Funktionselemente (2) als in der Z-Richtung anheb-und absenkbare Pipetten- bzw. Dispenser-Spitzen (20) oder als Referenznadel (21) ausgebildet sind.

10. Laborsystem (4) nach einem der Ansprüche 8 oder 9, **dadurch gekennzeichnet, dass** diese Korrekturelemente (19) als Schrauben oder Piezoelemente ausgebildet sind.

11. Laborsystem (4) nach einem der Ansprüche 8 bis 10, **dadurch gekennzeichnet, dass** jedem Korrekturelement (19) eine gegenwirkende Feder (22) zugeordnet ist.

12. Laborsystem (4) nach einem der Ansprüche 8 bis 11, **dadurch gekennzeichnet, dass** jeder Sitz (18) für ein Funktionselement (2) vier Korrekturelemente (19) umfasst, von denen zwei und zwei sich jeweils gegenüber liegen und in ihrer Wirkung ergänzen.

13. Verfahren zum Ausrichten von Behältern (3) auf einem Arbeitsfeld (6) eines Laborsystems (4) zum Arbeiten mit fluidhaltigen Proben (5), wobei das Laborsystem (4) ein im wesentlichen horizontales Arbeitsfeld (6) mit einer Länge (X) und einer sich rechtwinklig dazu erstreckenden Breite (Y) sowie zumindest einen Robotarm (7) mit zumindest einem im wesentlichen senkrecht zum Arbeitsfeld (6) in einer Z-Richtung ausgerichteten Funktionselement (2) umfasst, wobei der Robotarm (7) das Funktionselement (2) zumindest in einem Teilbereich (8) des Arbeitsfelds (6) zumindest in einer X oder Y-, oder Z-Richtung bewegen kann, wobei diese Richtungen-(-X,Y,Z) ein rechtwinkliges Koordinatensystem für die Bewegungen des Robotarms bzw. der Funktionselemente (2) definieren, bei welchem Verfahren eine Platte (14), die zwei sich kreuzende Lichtschranken (9,9') mit je einem Sender (10,10') und einem Empfänger (11,11') umfasst, innerhalb eines Teilbereichs (8) des Arbeitsfeldes (6) positioniert wird, **dadurch gekennzeichnet, dass** die Platte (14)die Aussenabmessungen einer Standardmikroplatte (15) aufweist und positionsgenau auf einem innerhalb des Arbeitsfeldes (6) angeordneten, hochpräzisen Träger (16) für Standardmikroplatten fixiert wird, wobei die Lichtschranken (9,9') auf der Platte (14) so angeordnet sind, dass die Strahirichtungen beider Abtaststrahlen (12,12') nicht-parallel zu den Aussenkanten der Platte (14) verlaufen.

14. Verfahren nach Anspruch13, **dadurch gekennzeichnet, dass** sich die Abtaststrahlen (12,12') der Lichtschranken (9,9') im wesentlichen unter einem Winkel von 90° kreuzen und mit den Aussenkanten der Platte (14) im wesentlichen einen Winkel von 45° einschliessen.

15. Verfahren nach Anspruch 13 oder 14, **dadurch gekennzeichnet, dass** Bewegungen des Robotarms (7) bzw. des Funktionselements (2) mit einem Rechner (13) erfasst werden, welcher die Signale der Empfänger (11,11') auswertet und diese Signale mit der X/Y-Position desjenigen Funktionselements (2) im Arbeitsfeld (6) korreliert, welches diese Signale auslöst.

16. Verfahren nach einem der Ansprüche 13 bis 15, **dadurch gekennzeichnet, dass** mit dem Robotarm (7) eine Referenznadel (21) im Kreuzungspunkt der Abtaststrahlen (12,12') der Lichtschranken (9,9') positioniert wird und die X-, Y- und Z-Werte dieses ersten Referenzpunktes im Rechner gespeichert werden.

17. Verfahren nach Anspruch 16, **dadurch gekennzeichnet, dass** die Platte (14) in einer zweiten Position auf dem selben hochpräzisen Träger (16) für standardmikroplatten (15) fixiert wird, dass der Robotarm (7) mit der Referenznadel (21) in dem theoretischen Kreuzungspunkt der Abtaststrahlen (12,12') der Lichtschranken (9,9') positioniert wird, und dass der hochpräzise Träger (16) so weit in X- oder Z-Richtung bewegt wird, bis sich die Referenznadel (21) im Kreuzungspunkt der Abtaststrahlen (12,12') der Lichtschranken (9,9') befindet.

18. Verfahren zum Ausrichten von Pipetten- bzw. Dispenser-Spitzen (20) auf einem Behälter (3), insbesondere auf die Wells (23) einer in dem Arbeitsfeld (6) eines Laborsystems (4) angeordneten Standardmikroplatte (15), **gekennzeichnet dadurch, dass** der Behälter (3) gemäss dem Verfahren nach Anspruch 17 ausgerichtet wird, und dass alle auszurichtenden Pipetten- bzw. Dispenser-Spitzen (20) in X- oder Y-Richtung durch die beiden Lichtschranken (9,9') bewegt werden, wobei bei jeder Unterbrechung der Abtaststrahlen (12, 12') die X- und Y-Werte der entsprechenden Pipetten- bzw. Dispenser-Spitzen (20) erfasst und im Rechner (13) gespeichert werden.

19. Verfahren nach Anspruch 18, **dadurch gekennzeichnet, dass** die aus den gespeicherten X- und Y-Werten erste und zweite Korrekturwerte für jede der auszurichtenden Pipetten- bzw. Dispenser-Spitzen (20) errechnet werden und die auszurichtenden Pipetten- bzw. Dispenser-Spitzen (20) nacheinander in eine Korriglerposition gebracht werden, aus der - mittels Aktivierung der entsprechenden Korrekturelemente (19) - die Pipetten- bzw. Dispenser-Spitzen (20) um deren individuellen Korrekturwerte verstellt werden, bis diese ihre Endposition im Kreuzungspunkt der Abtaststrahlen (12,12') der Lichtschranken (9,9') einnehmen.

20. Verfahren nach einem der Ansprüche 13 bis 19, **dadurch gekennzeichnet, dass** es durch den Rechner (13) gesteuert wird und automatisch abläuft.

## Claims

1. Plate (14) for use in positioning functional elements (2) and/or containers (3) in a laboratory system (4) for the manipulation of samples containing liquids (5), such that the laboratory system (4) comprises an essentially horizontal operating area (6) with length (X) and width (Y) extending essentially at right angles thereto and at least one robot arm (7) with at least one functional element (2) arranged in a Z-direction essentially perpendicular to the operating area (6), the robot arm (7) being able to move the functional element (2) over at least a sub-zone (8) of the operating area (6) at least in an X or Y or Z direction, these directions (X, Y, Z) defining a right-angle coordinate system for moving the robot arm or the functional element (2), respectively; and such that the plate (14) can be positioned within the sub-zone (8) of the operating area (6) and comprises two crossed light barriers (9,9') with a transmitter (10,10') and a receiver (11,11') for each, **characterized in that** the plate (14) displays the external dimensions of a standard microplate (15) and can be fixed in a precise position on a high-precision carrier (16) for standard microplates arranged within the operating area (6), the light barriers (9,9') being so arranged on the plate (14) that the directions of emission of the two scanning beams (12,12') do not run parallel to the outer edges of the plate (14).

2. Plate (14) according to Claim 1, **characterized in that** the scanning beams (12,12') of the light barriers (9,9') intersect at an angle essentially equal to 90° and include an angle essentially equal to 45° with the outer edges of the plate (14).

3. Plate (14) according to one of Claims 1 or 2, **characterized in that** the transmitters (10,10') and receivers (11,11') of the light barriers (9,9') are arranged each in a tunnel (17).

4. Plate (14) according to any one of the above Claims, **characterized in that** the two light barriers (9,9') on this plate (14) are so arranged that the scanning beams (12,12') of the light barriers (9,9') intersect at a point which is located in a defined position with respect to well A1 of a standard microplate (15).

5. Plate (14) according to Claim 4, **characterized in that** the point of intersection of the scanning beams (12, 12') of the light barriers (9, 9') is located at a distance from the centre of the plate (14).

6. Laboratory system (4) for the manipulation of samples containing liquids (5) comprising a computer (13) controlling a robot arm (7), **characterized in that** it comprises at least one plate (14) in accordance with one of the above Claims, the computer (13) detecting the movements of the robot arm (7) or the functional element (2), respectively, and analysing the signals from the receivers (11,11').

7. Laboratory system (4) according to Claim 6, **characterized in that** the computer (13) correlates these signals with the X/Y/Z position of the functional element (2) in the operating area (6) that triggers these signals.

8. Laboratory system (4) according to Claim 6 or 7, with a robot arm (7) comprising a seating (18) or a plurality of seatings (18) for the functional elements (2), these seatings (18) comprising correctional elements (19) designed to exert a force on each functional element (2) and thus correct the position of this functional element (2) in its seating (18) in at least one of the X, Y or Z directions, **characterized in that** these correctional elements (19,19',19",19"') act on the functional elements (2) in a direction corresponding either to the direction of the scanning beam (12) of the first light barrier (9) or to the direction of the scanning beam (12') of the second light barrier (9').

9. Laboratory system (4) according to Claim 8, **characterized in that** these functional elements (2) take the form of pipetting or dispensing tips (20) or reference needles (21) that can be raised or lowered in the Z direction.

10. Laboratory system (4) according to one of Claims 8 or 9, **characterized in that** these correctional elements (19) take the form of screws or piezoelectric elements.

11. Laboratory system (4) according to any one of Claims 8 to 10, **characterized in that** each correctional element (19) is provided with an opposing return spring (22).

12. Laboratory system (4) according to any one of Claims 8 to 11, **characterized in that** each seating (18) for a functional element (2) comprises four correctional elements (19) positioned in pairs opposing each other and complementing each other in their action.

13. Procedure for aligning containers (3) on the operating area (6) of a laboratory system (4) for the manipulation of samples containing liquids (5), the laboratory system (4) comprising an essentially horizontal operating area (6) with length (X) and width (Y) extending essentially at right angles thereto and at least one robot arm (7) with at least one functional element (2) arranged in a Z-direction essentially perpendicular to the operating area (6), the robot arm (7) being able to move the functional element (2) over at least a sub-zone (8) of the operating area (6) at least in an X or Y or Z direction, these directions (X, Y, Z) defining a right-angle coordinate system for moving the robot arm or the functional element (2), respectively, in which procedure a plate (14) equipped with two intersecting light barriers (9,9') with a transmitter (10,10') and a receiver (11,11') for each is positioned within the sub-zone (8) of the operating area (6), **characterized in that** the plate (14) displays the external dimensions of a standard microplate (15) and is fixed in a precise position on a high-precision carrier (16) for standard microplates arranged within the operating area (6), the light barriers (9,9') being so arranged on the plate (14) that the directions of emission of the two scanning beams (12,12') do not run parallel to the outer edges of the plate (14).

14. Procedure according to Claim 13, **characterized in that** the scanning beams (12,12') of the light barriers (9,9') intersect at an angle essentially equal to 90° and include an angle essentially equal to 45° with the outer edges of the plate (14).

15. Procedure according to Claim 13 or 14, **characterized in that** the movements of the robot arm (7) or of the functional element (2), respectively, are detected by a computer (13) which analyses the signals from the receivers (11,11') and correlates these signals with the X/Y position of the functional element (2) in the operating area (6) that triggers these signals.

16. Procedure according to any one of Claims 13 to 15, **characterized in that** by means of the robot arm (7), a reference needle (21) is positioned at the point of intersection of the scanning beams (12,12') of the light barriers (9,9'), and that the X, Y and Z values of this first reference point are stored in the computer.

17. Procedure according to Claim 16, **characterized in that** the plate (14) is fixed in a second position on the same high-precision carrier (16) for standard microplates (15), that the robot arm (7) with the reference needle (21) is positioned in the theoretical point of intersection of the scanning beams (12,12') of the light barriers (9,9'), and that the high-precision carrier (16) is moved far enough in the X or Z direction until the reference needle (21) is located at the point of intersection of the scanning beams (12,12') of the light barriers (9,9').

18. Procedure for aligning pipetting or dispensing tips (20) on to a container (3), particularly on to the wells (23) of a standard microplate (15) arranged in the operating area (6) of a laboratory system (4), **characterized in that** the container (3) is aligned by the procedure according to Claim 17 and that all the pipetting or dispensing tips (20) to be aligned are moved in the X or Y direction across the two light barriers (9,9'), each interruption of the scanning beams (12,12') entailing detection of the X and Y values of the corresponding pipetting or dispensing tips (20), which are stored in the computer (13).

19. Procedure according to Claim 18, **characterized in that** first and second correction values are calculated from the stored X and Y values for each of the pipetting or dispensing tips (20) to be aligned, and the pipetting or dispensing tips (20) to be aligned are brought successively into a correction position from which - by activation of the corresponding correctional elements (19) - the pipetting or dispensing tips (20) are displaced by their individual correction values until they take up their final position at the point of intersection of the scanning beams (12,12') of the light barriers (9, 9').

20. Procedure according to any one of Claims 13 to 19, **characterized in that** it is controlled by the computer (13) and executed automatically.

## Revendications

1. Plaque (14) destinée à une utilisation lors du positionnement d'éléments fonctionnels (2) et/ou de conteneurs (3) dans un système de laboratoire (4) destiné au travail avec des échantillons contenant un fluide (5), dans lequel le système de laboratoire (4) comprend une zone de travail (6) essentiellement horizontale présentant une longueur (X) et une largeur (Y) s'étendant perpendiculairement à celle-ci, ainsi qu'au moins un bras robotisé (7) comportant au moins un élément fonctionnel (2) aligné essentiellement verticalement par rapport à la zone de travail (6), dans une direction (Z), où le bras robotisé (7) peut déplacer l'élément fonctionnel (2) au moins dans une zone partielle (8) de la zone de travail (6) au moins dans une direction X ou Y ou Z, ces directions (X, Y, Z) définissant un système de coordonnées orthogonal pour les déplacements du bras robotisé et/ou des éléments fonctionnels (2); et la plaque (14) pouvant être positionnée au sein de la zone partielle (8) de la zone de travail (6) et comprenant deux barrières photoélectriques (9,9') qui se croisent, avec respectivement un émetteur (10,10') et un récepteur (11,11'), **caractérisée en ce que** la plaque (14) présente les dimensions externes d'une plaque de microtitration standard (15) et peut être fixée, en position précise, sur un support haute précision(16) de plaques de microtitration standard, disposé au sein de la zone de travail (6), les barrières photoélectriques (9,9') étant disposées sur la plaque (14) de façon telle que les directions de rayonnement des deux faisceaux d'exploration (12,12') ne s'étendent pas parallèlement aux arêtes externes de la plaque (14).

2. Plaque (14) selon la revendication 1, **caractérisée en ce que** les faisceaux d'exploration (12,12') des barrières photoélectriques (9,9') se coupent essentiellement selon un angle de 90° et forment avec les arêtes externes de la plaque (14) essentiellement un angle de 45°.

3. Plaque (14) selon l'une des revendications 1 ou 2, **caractérisée en ce que** les émetteurs (10,10') et les récepteurs (11,11') des barrières photoélectriques (9,9') sont respectivement disposés dans un tunnel (17).

4. Plaque (14) selon l'une des revendications précédentes, **caractérisée en ce que** les deux barrières photoélectriques (9,9') sont disposées sur cette plaque (14) de façon telle que les faisceaux d'exploration (12,12') des barrières photoélectriques (9,9') se coupent en un point qui se trouve dans une position définie par rapport au puits A1 d'une plaque de microtitration standard (15).

5. Plaque (14) selon la revendication 4, **caractérisée en ce que** le point d'intersection des faisceaux d'exploration (12,12') des barrières photoélectriques (9,9') se trouve hors du milieu de la plaque (14).

6. Système de laboratoire (4) permettant de travailler avec des échantillons contenant du fluide (5), qui comprend un ordinateur (13) qui commande un bras robotisé (7), **caractérisé en ce qu'il** comprend au moins une plaque (14) selon l'une des revendications précédentes, l'ordinateur (13) enregistrant les déplacements du bras robotisé (7) et/ou de l'élément fonctionnel (2) et évaluant les signaux des récepteurs (11,11').

7. Système de laboratoire (4) selon la revendication 6, **caractérisé en ce que** l'ordinateur (13) corrèle ces signaux à la position X/Y/Z de chaque élément fonctionnel (2) de la zone de travail (6) qui déclenche ces signaux.

8. Système de laboratoire (4) selon la revendication 6 ou 7, comportant un bras robotisé (7) qui comprend un logement unique (18) ou plusieurs logements (18) d'éléments fonctionnels (2), ces logements (18) comportant des éléments de correction (19) qui sont exécutés pour exercer une force sur chaque élément fonctionnel (2) et par conséquent pour corriger la position de chaque élément fonctionnel (2) dans son logement (18) dans au moins une direction X ou Y ou Z, **caractérisé en ce que** ces éléments de correction (19,19',19",19"') agissent sur les éléments fonctionnels (2) dans une direction qui concorde avec la direction du faisceau d'exploration (12) de la première barrière photoélectrique (9) ou avec la direction du faisceau d'exploration (12') de la seconde barrière photoélectrique (9').

9. Système de laboratoire (4) selon la revendication 8, **caractérisé en ce que** ces éléments fonctionnels (2) sont exécutés en tant que pointes de pipette ou de distributeur (20) pouvant être levées et abaissées dans la direction Z, ou en tant qu'aiguilles de référence (21).

10. Système de laboratoire (4) selon l'une des revendications 8 ou 9, **caractérisé en ce que** ces éléments de correction (19) sont exécutés en tant que vis ou éléments piézo-électriques.

11. Système de laboratoire (4) selon l'une des revendications 8 à 10, **caractérisé en ce qu'**à chaque élément de correction (19) est coordonné un ressort de réaction (22).

12. Système de laboratoire (4) selon l'une des revendications 8 à 11, **caractérisé en ce que** chaque logement (18) d'un élément fonctionnel (2) comprend quatre éléments de correction (19), lesquels sont respectivement opposés deux à deux et se complètent dans leur action.

13. Procédé d'alignement de récipients (3) sur une zone de travail (6) d'un système de laboratoire (4) destiné à travailler avec des échantillons contenant des fluides (5), dans lequel le système de laboratoire (4) comprend une zone de travail (6) essentiellement horizontale présentant une longueur (X) et une largeur (Y) s'étendant perpendiculairement à celle-ci, ainsi qu'au moins un bras robotisé (7) comportant au moins un élément fonctionnel (2) aligné essentiellement verticalement par rapport à la zone de travail (6), dans une direction (Z), le bras robotisé (7) pouvant déplacer l'élément fonctionnel (2) au moins dans une zone partielle (8) de la zone de travail (6) au moins dans une direction X ou Y ou Z, ces directions (X, Y, Z) définissant un système de coordonnées orthogonal pour les déplacements du bras robotisé et/ou des éléments fonctionnels, procédé dans lequel une plaque (14), qui comprend deux barrières photoélectriques (9,9') qui se coupent avec respectivement un émetteur (10,10') et un récepteur (11,11'), est positionnée au sein d'une zone partielle (8) de la zone de travail (6), **caractérisé en ce que** la plaque (14) présente les dimensions externes d'une plaque de microtitration standard (15) et peut être fixée, en position précise, sur un support haute précision (16) de plaques de microtitration standard, disposé au sein de la zone de travail (6), les barrières photoélectriques (9,9') étant disposées sur la plaque (14) de façon telle que les directions de rayonnement des deux faisceaux d'exploration (12,12') ne s'étendent pas parallèlement aux arêtes externes de la plaque (14).

14. Procédé selon la revendication 13, **caractérisé en ce que** les faisceaux d'exploration (12,12') des barrières photoélectriques (9,9') se coupent essentiellement en formant un angle de 90° et forment avec les arêtes externes de la plaque (14) essentiellement un angle de 45°.

15. Procédé selon la revendication 13 ou 14, **caractérisé en ce que** les déplacements du bras robotisé (7) et/ou de l'élément fonctionnel (2) sont enregistrés par un ordinateur (13) qui évalue les signaux des récepteurs (11,11') et corrèle ces signaux avec la position X/Y de chaque élément fonctionnel (2) de la zone de travail (6) qui déclenche ces signaux.

16. Procédé selon l'une des revendications 13 à 15, **caractérisé en ce qu'**avec le bras robotisé (7), une aiguille de référence (21) est positionnée au point d'intersection des faisceaux d'exploration (12,12') des barrières photoélectriques (9,9') et **en ce que** les valeurs X, Y et Z de ce premier point de référence sont mémorisées dans l'ordinateur.

17. Procédé selon la revendication 16, **caractérisé en ce que** la plaque (14) est fixée dans une seconde position sur le même support haute précision (16) de plaques de microtitration standard (15), **en ce que** le bras robotisé (7) est positionné avec l'aiguille de référence (21) dans le point d'intersection théorique des faisceaux d'exploration (12,12') des barrières photoélectriques (9,9') et **en ce que** le support haute précision (16) est déplacé dans la direction X ou Z jusqu'à ce que l'aiguille de référence (21) se trouve au point d'intersection des faisceaux d'exploration (12,12') des barrières photoélectriques (9,9').

18. Procédé d'alignement de pointes de pipette ou de distributeur (20) sur un récipient (3), en particulier sur les puits (23) d'une plaque de microtitration standard (15) disposée dans la zone de travail (6) d'un système de laboratoire (4), **caractérisé en ce que** le récipient (3) est aligné selon le procédé selon la revendication 17, et **en ce que** toutes les pointes de pipette ou de distributeur (20) à aligner sont déplacées dans la direction X ou Y par les deux barrières photoélectriques (9,9'), chaque interruption des faisceaux d'exploration (12,12') enregistrant les valeurs X et Y des pointes de pipette ou de distributeur (20) correspondantes et les mémorisant dans l'ordinateur (13).

19. Procédé selon la revendication 18, **caractérisé en ce que** les premières et secondes valeurs de correction découlant des valeurs X et Y mémorisées sont calculées pour chacune des pointes de pipette ou de distributeur (20) à aligner, et **en ce que** les pointes de pipette ou de distributeur (20) à aligner sont amenées les unes après les autres dans une position de correction à partir de laquelle, au moyen de l'activation des éléments de correction (19) correspondants, les pointes de pipette ou de distributeur (20) sont décalées de leurs valeurs de correction individuelles jusqu'à adopter leur position finale dans le point d'intersection des faisceaux d'exploration (12,12') des barrières photoélectriques (9,9').

20. Procédé selon l'une des revendications 13 à 19, **caractérisé en ce qu'**il est commandé par un ordinateur (13) et se déroule automatiquement.
